# EUROPEAN PATENT SPECIFICATION

(11) **EP 0 783 547 B1**
(45) Date of publication and mention of the grant of the patent: **19.06.2002**
(21) Application number: 94927150.6
(22) Date of filing: 11.08.1994
(51) Int. Cl.: C09C 1/36, C09D 17/00

(54) **MEDIA MILLING PIGMENT SLURRIES TO ELIMINATE OR REDUCE OVERSIZE PARTICLES**
PIGMENTZERKLEINERUNG MITTELS MAHLKÖRPER ZUR ENTFERNUNG VON ÜBERDIMENSIONIERTEN TEILCHEN
BROYAGE DE BOUES PIGMENTEES A L'AIDE D'UN MILIEU APPROPRIE AFIN D'ELIMINER OU DE REDUIRE LES PARTICULES SURDIMENSIONNEES

(43) Date of publication of application: 16.07.1997
(73) Proprietor: E.I. DU PONT DE NEMOURS AND COMPANY, Wilmington Delaware 19898 (US)
(72) Inventor: OTT, Michael, W., Newark, DE 19711 (US); SULLIVAN, Brian, W., Newark, DE 19711-6753 (US)
(74) Representative: Woodcraft, David Charles
(86) International application number: US9408316
(87) International publication number: WO9605256

(56) References cited:
- GB-A- 2 057 409
- US-A- 3 342 424
- US-A- 4 177 081
- US-A- 5 356 470
- DATABASE WPI Week 8718 Derwent Publications Ltd., London, GB; AN 87-127430 & SU,A,1 255 630 (BARSKII) , 7 September 1986
- DATABASE WPI Week 8329 Derwent Publications Ltd., London, GB; AN 83-714584 & JP,A,58 099 121 (ONAHAMA SAKAI KAGAK) , 13 June 1983

## Description

### Background of the Invention

The present invention relates to the preparation of a composition of titanium dioxide in an aqueous slurry suitable for production of coated boards, e.g., paperboards having high gloss characteristics and surface smoothness.

Titanium dioxide slurries suitable for use in paper and paperboard manufacture are relatively well known. For example, Hall et al. disclose in USP 3,702,773, a stabilized titanium dioxide slurry of 60 to 82% by weight of TiO₂ for use in paper manufacturing. DeColibus discloses in USP 4,177,081 titanium dioxide slurries imparting high gloss to water-based acrylic paint systems, and Glaeser discloses in USP 4,214,913 a process for producing rutile TiO₂ slurries which may be used in board coating.

In order to produce coatings with sufficient gloss and smoothness, certain finishing steps are required to be performed on the slurries. Consequently, such steps as filtration, washing, drying, micronization and reslurrying are often performed. Other advantages such as improved tinctorial strength are achieved by a reduction in particle size. As a result, various techniques are known for reduction of the particle size of such slurries, e.g., mechanical grinding (Whatley et al., USP 3,342,424), steam milling micronization (Baloga, USP 4,427,451), high shear milling (Gladu, USP 4,288,254, Hall et al., above, Slepetys, USP 3,549,091, Jester et al., USP 3,380,665, micronizing process) and ball milling (Jacobs et al., USP 3,313,492).

It is desirable, however, to have a production process that yields the improved coating smoothness of conventional finishing steps.

The present invention concerns a process for reducing the amount of oversized particles greater than about 1 micron, especially those particles from about 10 to about 44 microns, in a rutile pigment slurry. The resultant slurry is particularly suitable for producing improved board coating grade titanium dioxide coatings. Reduction of the oversized particles is achieved preferably through media milling. In the following, all percentages are by weight unless otherwise indicated.

According to the present invention, therefore, there is provided a process for the production of TiO₂ slurries having enhanced coatability on paper and paper boards, said process comprising (a) slurrying TiO₂ particles produced from the chloride process at a solids content of about 79∼83 percent by weight so as to achieve deagglomeration of the slurry, while still permitting sufficient fluidity to permit dispersions thereof, (b) diluting the slurry to a point sufficient to permit slurry handling and transfer, (c) optionally removing any scrub solids from the TiO₂ process, and (d) media milling the slurry until the TiO₂ particles having a size of 10-44 microns are reduced to less than 0.1 percent by weight based on the total weight of TiO₂.

Typical slurries produced conventionally have a particle size of about 1-10 microns, and about ½-2% of the particles have a size of 10-44 microns. It has now been discovered, for the first time, that reduction of these particles, particularly those of the 10-43 micron range, enables production of improved board coatings having the smoothness and gloss of slurries produced with more expensive and laborious conventional finishing steps. Typically, slurries processed according to the invention have, subsequent to media milling, about 0.1% particles 10-44 microns, with about 94% of the particles having a size of less than about 1 microns.

Media milling is an established technology for particle size reduction, with process equipment being commercially available. For example, in EP 298,777, a method of producing fine particles is disclosed involving media milling a suspension, separating a resultant slurry by size and recycling a coarse fraction to the mill. Further, JP 210,521 discloses media milling of calcium carbonate to a size below 15 microns. Pigments suitable for paper coating are obtained thereby.

In the invention, the titanium dioxide slurry having particles greater than 10 microns is fed into a grind chamber which is filled with beads. Many types of media or different sizes may be used, with one of ordinary skill in the art being able to adjust the media to produce the desired result based on the size distribution of the particles in the starting material according to conventional protocols. The media is stirred in the grind chamber by a series of discs attached to a rotating shaft. The motion of the media is perpendicular to the direction in which the slurry is pumped, and therefore the TiO₂ particles are sheared by the media. Typically, a screen keeps the media inside the grind chamber but allows the TiO₂ slurry out of the mill. Optionally, the product of the mill can be further screened.

Titanium dioxide slurry with particles over 1 micron, preferably over 10 microns, is suitable for use in the present invention. Preferred starting materials include rutile pigment slurries as produced by Glaeser in USP 4,214,913. Typically, such slurries have on the order of 1% by weight of their particles about 10 microns, e.g., a "subgrit" level of from 10-44 microns.

The starting slurry is obtained from TiO₂ produced by the chloride process. The process typically comprises oxidizing with oxygen or an oxygen containing gas, a mixture of TiCl₄ and AlCl₃, and after at least 80% of the TiCl₄ has been converted to TiO₂, the amount of AlCl₃ being sufficient to form 0.1-1.5% Al₂O₃ in the TiO₂. Preferably, the improved slurry for board coating is produced by (a) slurrying TiO₂ particles at a sufficiently high solids content so as to achieve deagglomeration of the slurry, while still permitting sufficient fluidity to permit dispersion thereof, (b) diluting the slurry to a point sufficient to permit slurry handling and transfer, and (c) media milling the slurry. Preferably the slurry is made from TiO₂ directly removed from the oxidation section of the process. (Sometimes referred to herein as base TiO₂.)

Typically, such starting material slurries in (a) have about 79-83% by weight of solids. In (b), the slurry typically is diluted to about 70-73% solids, more preferably about 72%.

A typical overall process is as follows:

| Base | | | |
|---|---|---|---|
| TiO₂ Pigment | Slurry | Media | |
| | | | Improved |
| TiO₂ Scrubs → | (70-73% → solids) | Mill → | Slurry |

By TiO₂ scrubs is meant the scrub solids, such as large particle size TiO₂, which is used to scrub and remove build-up from the interior of the flue pipes downstream from the TiO₂ oxidation section.

The overall process may be conducted in a batch or continuous mode. Preferably, the process is conducted continuously.

Without further elaboration, it is believed that one skilled in the art can, using the preceding description, utilize the present invention to is fullest extent. The following preferred specific embodiments are, therefore, to be construed a merely illustrative, and not limitation of the remainder of the disclosure in any way whatsoever.

In the foregoing and in the following examples, all temperatures are set forth uncorrected in degrees Celsius and unless otherwise indicated, all parts and percentages are by weight.

The entire disclosures of all applications, patents and publications cited above and below are hereby incorporated by reference.

### EXAMPLES

### Base TiO₂ pigment is made as follows:

A stream of oxygen preheated to a temperature of 980°C is introduced into one end of 10-inch inside diameter tubular, chlorine purged reactor operated at 1.76 kg/cm² gauge at a rate of 7730 kg per hour.

A titanium tetrachloride stream containing sufficient aluminum trichloride to provide one percent Al₂O₃ in the titanium dioxide based on the titanium dioxide is preheated to 480°C and introduced into the reactor in vapor form through an annular ring and mixing tee to insure complete and uniform mixing with the preheated oxygen.

The temperature of the reaction gas stream is 1300°-1450°C after the addition of the titanium tetrachloride and aluminum trichloride is complete. PCl₃ is then added at a point where 92% of the TiCl₄ was converted to TiO₂ through a similar annular ring in sufficient quantity to provide 0.25% P₂O₅ on the titanium dioxide. The PCl addition is followed by scrub solids before the reaction stream exits the reactor into cooling ducts. The reaction stream with the scrub solids is cooled. The reaction produces pigmentary size 100% rutile TiO₂.

Scrub solids are rutile TiO₂ particles of granular 20-40 mesh size that has been calcinated and is used to clean the walls of the reactor.

The base TiO₂ is made into rutile pigment slurry by the following process which disperses and deagglomerates the base pigment to produce a slurry product.

682 kg of H₂O are added to a slurry tank. 10.9 kg of powdered tetrapotassium pyrophosphate and 16.4 kg of liquid 2-amino-2methyl-1-propanol (AMP) are added to the H₂O and are stirred until dissolved. 2830 kg of TiO₂ prepared as described above are added over a period of 20 minutes to form a slurry. The slurry is ground for 30 minutes. The slurry contents are diluted to about 72% by adding 409 kg of H₂O. The slurry is screened to remove grit.

The above slurry was then fed to a 25 liter Drais media mill. The media mill's grind chamber is charged to 85% capacity with 107 lbs Zr₂:SiO₂ media. The media nominal size range is 1.0-1.6 mm in diameter. The milling of the slurry is done in a continuous fashion. The flow rate of the slurry through the mill is adjusted to provide a 1.27 minute grinding residence time. After passing through the grind chamber, the product slurry is separated from the grinding media by a set of screens.

The particle size distribution between 10-44 microns is determined by laboratory screening operations. The data for unmilled and milled product is summarized below:

| wt. % of TiO₂ Particles | | |
|---|---|---|
| | Unmilled | Milled |
| %30 - 40 microns | 0.163 | 0.010 |
| %20 - 30 microns | 0.183 | 0.008 |
| %10 - 20 microns | 0.530 | 0.058 |
| Total | 0.876 | 0.076 |

The particle size distribution between 1-10 microns is determined by Sedigraph analysis. The data for unmilled and milled product is summarized below:

| wt. % of TiO₂ Particles | | |
|---|---|---|
| | Unmilled | Milled |
| 5 - 10 microns | 1 | 0.5 |
| 2 - 5 microns | 3 | 1.5 |
| 1 - 2 microns | 5 | 4 |

Other property improvements determined were:

| | Unmilled | Milled |
|---|---|---|
| High Shear Visc. (cp) | 34 | 23 |
| Dry Film Drawdown Gloss | 90 | 105 |

The viscosity was measured at 4,000 reciprocal seconds shear rate using a Hercules High Shear Viscometer. Gloss is measured as a relative reflectance on a 0.02 inch thick dry slurry film.

To further test milled pigment quality, its performance was tested by coating board samples at 40% solids loading. Coating quality was evaluated by counting the number of bumps observed per unit area at 19 x magnification. The milled product produces significantly smoother board as shown below:

| | Unmilled | Milled |
|---|---|---|
| Average number of bumps (square inch) | 642 | 179 |

The preceding examples can be repeated with similar success by substituting the generically or specifically described reactant and/or operating conditions of this invention for those used in the preceding examples.

From the foregoing description, one skilled in the art can easily ascertain the essential characteristics of this invention and make various changes and modifications of the invention to adapt it to various usages and conditions.

## Claims

1. A process for the production of TiO₂ slurries having enhanced coatability on paper and paper boards, said process comprising (a) slurrying TiO₂ particles produced from the chloride process at a solids content of about 79∼83 percent by weight so as to achieve deagglomeration of the slurry, while still permitting sufficient fluidity to permit dispersions thereof, (b) diluting the slurry to a point sufficient to permit slurry handling and transfer, (c) optionally removing any scrub solids from the TiO₂ process, and (d) media milling the slurry until the TiO₂ particles having a size of 10-44 microns are reduced to less than 0.1 percent by weight based on the total weight of TiO₂.

2. A process according to claim 1, wherein in the slurry in step (a) contains about 5% by weight of particles having a size of about 1∼10 microns.

## Patentansprüche

1. Verfahren zur Herstellung von TiO₂-Schlämmen mit verbesserter Auftragsfähigkeit auf Papier und Karton, wobei das Verfahren aufweist: (a) Aufschlämmen von nach dem Chloridverfahren hergestellten TiO₂-Teilchen mit einem Feststoffgehalt von etwa 79∼83 Gew.-%, um eine Deagglomeration des Schlamms zu erreichen und dabei dennoch eine ausreichende Fließfähigkeit für Dispersionen des Schlamms zu ermöglichen, (b) Verdünnen des Schlamms bis zu einem Punkt, der ausreicht, um das Umfüllen und den Transport des Schlamms zu ermöglichen, (c) wahlweise Entfernen etwaiger fester Wasch- bzw. Reinigungsrückstände vom TiO₂-Verfahren und (d) Mahlen des Schlamms mit Mahlmittel, bis der Anteil der TiO₂-Teilchen mit einer Größe von 10-44 µm auf weniger als 0,1 Gew.-% abgenommen hat, bezogen auf das Gesamtgewicht des TiO₂.

2. Verfahren nach Anspruch 1, wobei der Schlamm in Schritt (a) etwa 5 Gew.-% Teilchen mit einer Größe von etwa 1∼10 µm enthält.

## Revendications

1. Procédé pour la production de suspensions épaisses de TiO₂ présentant une aptitude au revêtement accrue sur du papier et des cartons, ledit procédé comprenant (a) la mise en suspension de particules de TiO₂ produites à partir du procédé au chlorure à une teneur en solides d'environ 79∼83 pour-cent en poids de manière à atteindre une désagglomération de la suspension épaisse, tout en autorisant toujours une fluidité suffisante pour permettre des dispersions de celles-ci, (b) la dilution de la suspension épaisse jusqu'à un point suffisant pour permettre la manipulation et le transfert de la suspension épaisse, (c) le retrait éventuel de tout solide de lavage/nettoyage provenant du procédé de TiO₂, et (d) le broyage par éléments broyeurs de la suspension épaisse jusqu'à ce que les particules de TiO₂ présentant une taille de 10-44 microns soient réduites à moins de 0,1 pour-cent en poids sur la base du poids total de TiO₂.

2. Procédé suivant la revendication 1, dans lequel la suspension épaisse dans l'étape (a) contient environ 5% en poids de particules présentant une taille d'environ 1∼10 microns.
